# EUROPEAN PATENT APPLICATION

(11) **EP 0 638 385 A1**
(43) Date of publication of application: **15.02.1995**
(21) Application number: 94305857.8
(22) Date of filing: 08.08.1994
(51) Int. Cl.: B23B 51/04

(54) **Cutting tool**

(30) Priority: 09.08.1993 IL 10662593
(71) Applicant: ISCAR LTD., Migdal, Tefen 24959 (IL)
(72) Inventor: Ochayon, Moti, Nahariya (IL)
(74) Representative: Sturt, Clifford Mark

(57) **Abstract**

A metal cutting tool comprising a cutting insert (1) having a cutting portion (7) and a tail portion (9) formed integrally therewith, a tool holder (2) having a holder head portion (18) formed with an insert retaining pocket (20) adapted to receive the insert tail portion (9) and a clamping screw (3). Upon the tail portion (9) being received in the pocket (20), a tail portion base (11) bears on a pocket base (22) and tail portion side walls (12) are disposed adjacent pocket side walls (23). Insertion of the clamping screw (3) into a through bore (15) of the tail portion aligned with a threaded pocket bore (26) and consequent screw coupling of a screw thread portion (6) in the threaded pocket bore (26) results in a clamping portion (4) of the screw bearing clampingly against a clamping engaging portion (17) of the tail portion through bore. As a consequence, the tail portion base (11) is biased against the pocket base (22) and a tail terminal portion (13) is biased towards an inner portion of the pocket (20) so as to ensure a contact between clamping surfaces of the side walls (12) of the tail portion and of the side walls (23) of the pocket (20).

## Description

### FIELD OF THE INVENTION

The present invention relates to a metal cutting tool comprising an exchangeable hard metal cutting insert replaceably mounted on a tool holder and particularly used in operations such as milling, drilling and turning. The invention is particularly related to cutting tools having a small cutting diameter, e.g. of approximately 6 to 30 mm.

### BACKGROUND OF THE INVENTION

With tools having such small cutting diameters the body of the insert as well as the tool holder are of restricted dimensions and this, in its turn, restricts the possibilities for reliably mounting the insert in the tool.

There is disclosed in U.S. 4,344,724 a cutting tool consisting of a cutter head formed with a pair of jaws defining a slot therebetween within which slot a knife plate is exchangeably mounted and is secured in position by a transverse clamping screw penetrating through respective bores in the jaws and in the plate. Such a manner of clamping is suitable only for cutting tools employing relatively flat cutting inserts. Furthermore, in order to ensure that the cutting tool has a rigid construction, the screw and consequently the through-bores respectively made in the plate and in the cutter head must have relatively large dimensions, thereby setting a limit on the minimum cutting diameter of the tool.

There is disclosed in US 4,850,759 a cutting tool having a small cutting diameter and comprising a cutting insert formed with a conical tail, which insert is detachably mounted in a conical cavity of a tool shaft. The tool is provided with a locking screw longitudinally received within the cavity and having an innermost, externally threaded portion adapted to be screwed into an internally threaded portion of the cavity and an outermost, hook-shaped portion adapted to engage a similarly hook-shaped portion of the tail. Thus, when the screw cooperates with the internally threaded portion of the cavity the tail is pulled into the cavity with its circumferential conical surface contacting the conical surface of the cavity. However, the specifically shaped engaging portions of the cutting body and of the screw in combination with their small dimensions render production of such tool rather cumbersome, especially in view of the fact that in this case final precise machining operations, such as grinding, polishing, etc., which usually follow powder metallurgy process of manufacturing tools of this kind, have to be carried out manually rendering the whole production complicated and expensive.

It is the object of the present invention to provide a new and improved metal cutting tool wherein a reliable and rigid mounting of a cutting insert in a tool holder is achieved for inserts of a wide range of diameters and shapes, especially for those with relatively small cutting diameters.

### SUMMARY OF THE INVENTION

In accordance with the present invention, there is provided a metal cutting tool which comprises
a cutting insert having a cutting portion and a support portion formed integrally therewith;
a tool holder having a holder head portion formed with an insert retaining pocket adapted to receive said insert support portion;
said insert support portion being formed with a support portion through bore and said retaining pocket being formed with a threaded pocket bore, the bores being adapted to be aligned when said support portion is received in said pocket; and
screw means for insertion into said aligned bores so as to screw clamp said support portion in said pocket;
characterised in that
said support portion constitutes a tail portion having a base and a pair of side walls substantially perpendicular to said base which side walls converge towards each other from the cutting portion to a tail terminal portion remote from the cutting portion, said support portion through bore being formed, adjacent a rim thereof, with a clamping engaging portion adjacent said tail terminal portion;
said insert retaining pocket being defined by a pocket base and a pair of pocket side walls which converge towards each other from a leading end of said holder head portion to an inner portion of said pocket remote from said leading end at an angle corresponding to an angle between the converging side walls of the tail portion; and
said screw means comprising a clamping screw having an upper clamping portion and a screw thread portion and being adapted to be freely received within said support portion through bore;
the arrangement being such that
upon said tail portion being received in said pocket, said support portion base bears on the pocket base and the support portion side walls are disposed adjacent the pocket side walls, insertion of said clamping screw into said aligned bores and consequent screw coupling of said screw thread portion in the threaded pocket bore results in said clamping portion of the screw bearing clampingly against said clamping engaging portion of the support portion through bore with consequent biasing of said tail portion base against said pocket base and biasing of said tail terminal portion towards said inner portion of the pocket so as to ensure a contact between clamping surfaces of said side walls of the tail portion and of said side walls of the pocket.

According to a preferred embodiment, the tail portion of the insert extends from the cutting portion of the insert adjacent a rear end face of said cutting portion, a maximal cross-sectional dimension of the tool adjacent this rear end face of the cutting portion not exceeding a maximal cross-sectional dimension of the insert.

Preferably, the side walls of the tail portion are provided with bevelled upper portions constituting said clamping surfaces and adapted to bias against respectively sloping upper portions of the pocket side walls. Preferably, the angle between the side walls of the pocket is very slightly less than the angle between the side walls of the tail portion and it is then preferable to form each bevelled portion and/or each sloping portion with a relatively small recessed portion located at intermediate regions thereof. In this way it is possible to localize contact between the respective bevelled and sloping portions at predetermined locations.

Preferably, the clamping screw is formed with a conical portion which tapers from a screw head to the screw thread portion, said conical portion constituting the clamping portion of the clamping screw, the through bore of the support portion being formed with an outwardly tapering countersunk portion and having an axis offset with respect to an axis of the pocket bore in the direction of the cutting portion of the insert.

With such a cutting tool, whilst the clamping screw serves effectively to secure the insert in the tool holder, any torque which arises out of rotation of the tool during cutting is taken up by the clamping surfaces of the support portion and pocket and, in consequence, decreased stresses are set up in the clamping screw. This enables the screw to have a relatively small diameter and, in consequence, the overall dimensions of the tool are not unduly limited, which is particularly advantageous for tools with small cutting diameters.

### BRIEF DESCRIPTION OF THE DRAWINGS

For a better understanding of the present invention and to show how the same may be carried out in practice reference will now be made to the accompanying drawings, in which
**Fig. 1** is an exploded view of a cutting tool in accordance with the present invention;
**Fig. 2** is a top view of the cutting tool shown in Fig.1, when the cutting tool is assembled;
**Fig. 3, 4** and **5** are respectively top, front and side views of a cutting insert forming a part of the cutting tool shown in Fig. 1;
**Fig. 6** is a cross-sectional view of the insert shown in Fig. 3 along the line VI-VI;
**Fig. 7** is a perspective view on an enlarged scale of a pocket formed in the tool holder shown in Fig. 1;
**Fig. 8** is a view, on an enlarged scale, of an encircled detail of the tool illustrated in Fig. 2 ;
**Fig. 9** is a cross-sectional view of the detail shown in Fig. 8, along the line IX-IX;
**Fig. 10** is a cross-sectional view of the detail shown in Fig. 8, along the line X-X;
**Figs. 11** and **12** are views corresponding respectively to Figs. 8 and 9 and illustrating an alternative embodiment of the tool in accordance with the present invention; and
**Figs. 13** and **14** are respectively bottom and side views illustrating additional alternative features of a tail portion forming a part of the insert shown in Figs. 3 to 6.

### DETAILED DESCRIPTION OF PREFERRED EMBODIMENTS

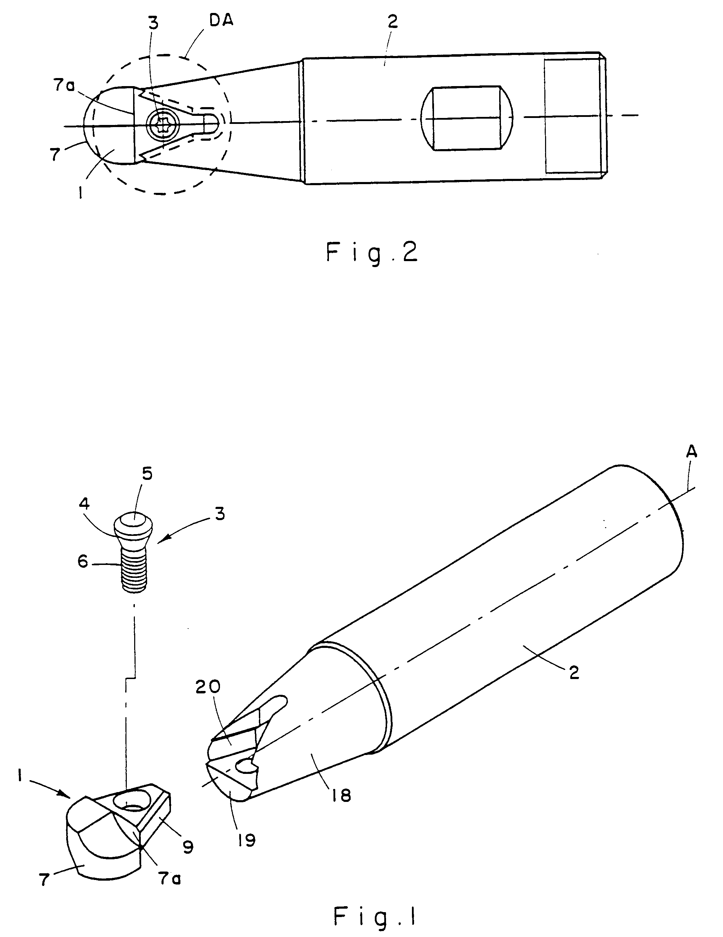

**Figs. 1** and **2** illustrate a metal cutting tool according to the preferred embodiment of the present invention. The cutting tool having a longitudinal axis **A** comprises a cutting insert **1**, a tool holder **2** and a clamping screw **3**.

The clamping screw **3** is formed with a conical portion **4** which tapers from a screw head **5** to a screw threaded portion **6**, the conical portion **4** serving to secure the insert **1** in the tool holder **2**.

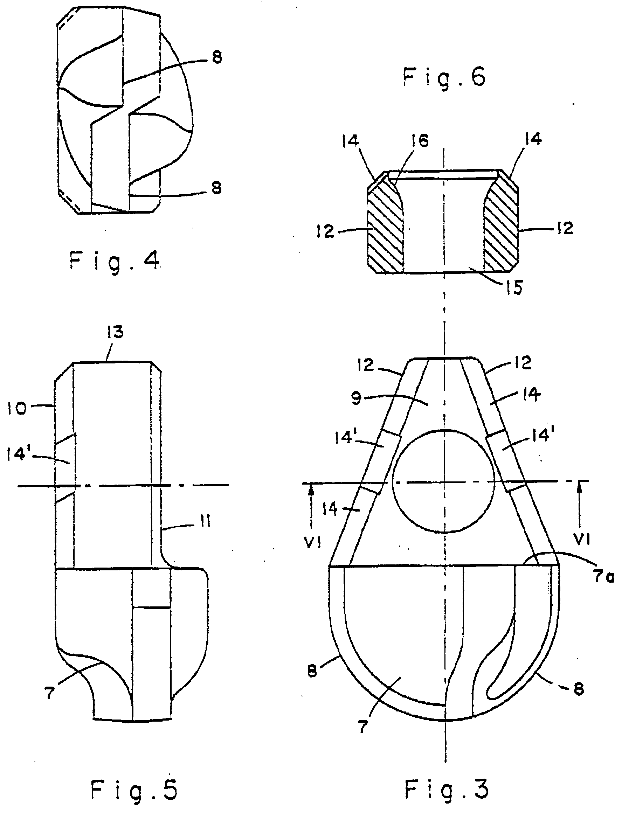

The cutting insert **1** is shown in **Figs. 3**, **4**, **5** and **6**. The insert **1** has a leading cutting portion **7** with two cutting edges **8** and a tail portion **9** integrally formed therewith and extending from the cutting portion adjacent a rear end face **7a** thereof. A maximal cross-sectional dimension of the tool holder (Fig.2) adjacent said rear end face **7a** of the cutting portion does not exceed a maximal cross-sectional dimension of the insert. The cutting portion **7** will not be further described since it does not bear on the present invention and may be of various designs.

The tail portion **9** is a prismatic body of a trapezoid-like shape and has a top face **10**, a base **11** and a pair of side walls **12** which are preferably normal to the base **11** and converge in the direction from the cutting portion **7** to a tail terminal portion **13** remote from the cutting portion **7**. The side walls **12** have bevelled upper portions **14** inclined with respect to the base **11** of the tail portion **9**. The tail portion **9** is formed with a central through bore **15** having an outwardly tapering countersunk portion **16**. The through bore **15** has dimensions enabling the clamping screw **3** to be freely received therein.

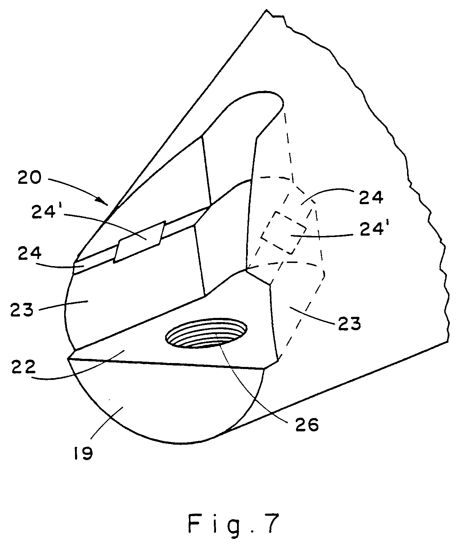

The tool holder **2** is formed with a conical head **18** having a leading end **19**. The tool holder head **18** is formed with an insert retaining pocket **20** shown in **Fig. 7**. The pocket **20** has a shape so as to receive and mate with the tail portion **9** of the insert. Thus, the pocket **20** has a base **22** and side walls **23** converging at a manner similar to and at an angle not exceeding that of the converging tail portion side walls **12**. The side walls **23** are provided with sloping upper portions **24** which slope with respect to the base **22** of the pocket in a manner similar to the sloping of the bevelled portions **14** of the tail side walls **12** with respect to the base **11**. The sloping portions **24** and/or the bevelled portions **14** are preferably formed at intermediate regions thereof with respective relatively small recessed portions **24'** and/or **14'**. In this way it is possible to localize contact between the respective bevelled and sloping portions, when the insert is mounted in the tool holder, at predetermined locations. The pocket **20** has a threaded bore **26** adapted to cooperate with the threaded portion **6** of clamping screw **3**.

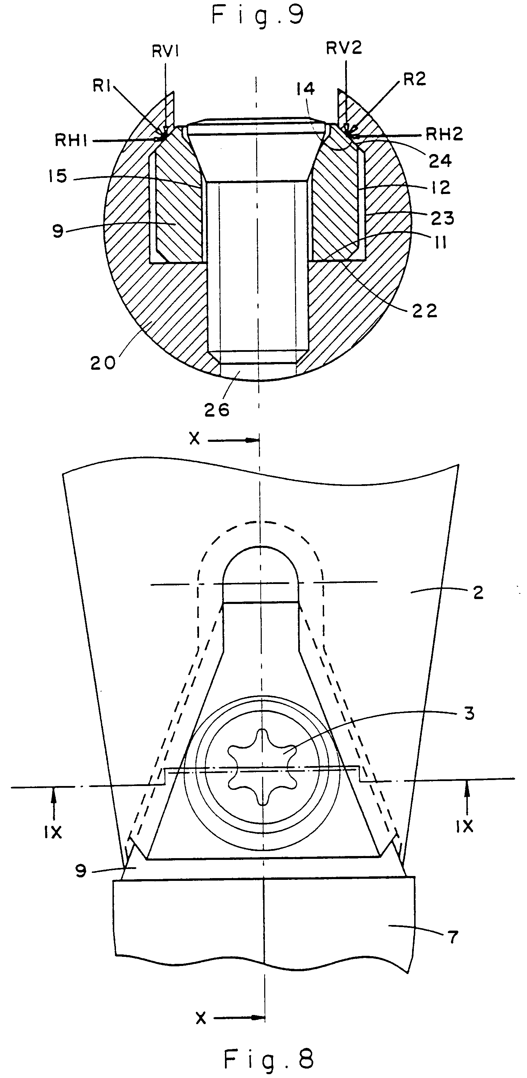

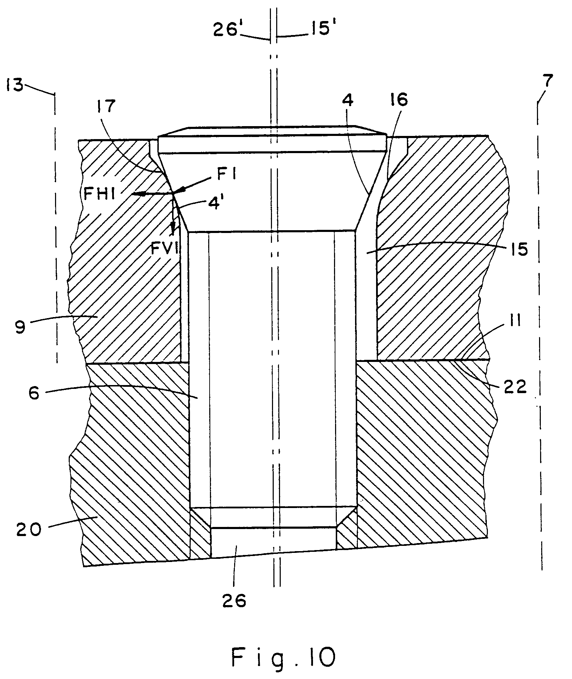

The insert **1** and the tool holder **2** assembled in accordance with the preferred embodiment of the present invention are shown in **Figs. 8**, **9** and **10**. When the tail portion **9** of cutting insert **1** is received in the pocket **20** of the tool holder **2**, the tail portion base **11** bears on the pocket base **22** and the tail portion side walls **12** are disposed adjacent the pocket side walls **23**. The respective locations of the bores **15** and **26** are such that when the tail **9** is thus received in the pocket **20** the through bore **15** and the internally threaded bore **26** are aligned with an axis **15'** of the bore **15** of the tail portion **9** offset with respect to an axis **26'** of the pocket bore **26** in the direction of the insert cutting portion **7** (schematically designated by a dotted line). In this way the bore **15** completely overlaps the bore **26**.

When the screw **3** is inserted into the aligned bores **15** and **26**, its threaded portion **6** freely penetrates through the through bore **15** of the tail portion **9** and cooperates with the threaded bore **26** of the pocket **20** resulting in a clamping portion **4'** of the screw conical portion **4** engaging clampingly the countersunk portion **16** of through bore **15** at its clamping engaging surface **17** adjacent the tail terminal portion **13** (schematically designated by a dotted line), thereby exerting a resulting clamping force F₁ on the clamping engaging surface **17**.

As the contact between the clamping engaging portion **4'** of the screw **3** and the clamping engaging surface **17** of the tail **9** takes place at an innermost region of the pocket area, a horizontal component FH₁ of the resulting force F₁ causes the terminal portion **13** of the tail portion **9** to be biased in the direction of the inner portion of the pocket **20** and, as a consequence, upper sloping portions **24** of the pocket bear against the bevelled upper portion **14** of the tail **9**, thereby constituting respective clamping surfaces of the tail portion **9** and the pocket **20**. A vertical component FV₁ of the force F₁ causes the base **11** of the tail portion **9** to be biased against the base **22** of the pocket **20**. Under the influence of the clamping force F₁ and, in particular, of its horizontal component FH₁, a wedging between the bevelled portions **14** of the tail **9** and the sloping portions **24** of the pocket **20** is effected, exerting reaction forces R₁ and R₂ between the sloping portions **24** and bevelled portions **14** at the place of their contact Vertical components RV₁ and RV₂ of the reaction forces R₁ and R₂ bias the tail base **11** against the pocket base **22** and horizontal components RH₁ and RH₂ bias bevelled portions **14** of the tail portion against the sloping portions **24** of the pocket. Thus, the tail portion **9** is effectively double-clamped in horizontal and vertical directions in the pocket **20** of the tool holder ensuring a reliable and rigid mounting of the cutting insert **1** in the tool.

It should be mentioned that, when the side walls **12** of the tail portion **9** and the side walls **23** of the pocket **20** are designed to substantially converge at the same angle the walls surfaces can never be ensured to completely mate along their entire lengths due to manufacturing tolerances, and therefore the contact between the bevelled portions **14** of the tail portion and the sloping portions **24** of the pocket could take place anywhere along the length thereof. However, when the side walls **23** of the pocket **20** converge at an angle slightly less than that between the converging side walls **12** of the tail portion **9** and in view of the provision of the intermediate recessed portions **14'** and **24'**, contact may be ensured to take place in predetermined locations. Thus, the provision of the small recessed portions **14'** and/or **24'** ensures that contact takes place at the regions between said recesses and the rear end face **7a** of the insert. Furthermore, due to the above biasing of the terminal portion **13** of the tail in the direction of the inner portion of the pocket **20** an additional contact will most probably be achieved in this case between the bevelled portions **14** to the respective sloping portion **24** at a region adjacent said inner portion of the pocket.

Whilst the clamping screw **3** serves to secure effectively the insert **1** in the tool holder **2**, any torque which arises out of rotation of the tool during cutting is taken up by the clamping surfaces of the tail portion **9** and the pocket **20** and, in consequence, decreased stresses are set up in the clamping screw **3**. This enables the screw **3** to have a relatively small diameter and, in consequence, the overall dimensions of the tool are not unduly limited, which is particularly advantageous for tools with small cutting diameters.

When cutting inserts of the kind to which the present invention refers require to have their cutting edges sharpened or resharpened on a grinding machine, the cutting insert can be mounted in the same tool holder. Therefore, when the cutting insert is manufactured by a powder metal technology, the clamping surfaces of the tail portion of the insert may be formed with a required standard precision without additional finishing operations.

The clamping screw **3**, the tail portion **9** of the cutting insert **1** and the pocket **20** of the tool holder **2** of the cutting tool in accordance with the present invention may be of various designs and dimensions depending on specific applications of the tool. Thus, the clamping engaging surfaces **17** and **4'** of respectively the through bore **15** and the conical portion **4** of the clamping screw **3** may have shapes other than those specifically shown, e.g. they can be provided with suitable engaging projections. The side walls portions **12** and **14** of the tail portion **9** and accordingly the side walls portions **23** and **24** of the pocket **20** may have different sizes and different slope angles, if any. The lower portions **12** and **23** of the side walls of the, respectively, tail portion **9** and pocket **20** may be relatively small with respect to the respective bevelled portions **14** and sloping portions **24** thereof imparting to the rear end face **7a** of the tail a trapezoid-like shape in the front view.

The function of the small recessed portions **14'** and **24'** in ensuring contact of the adjacent surfaces in predetermined localized positions can be clearly achieved by alternative means.

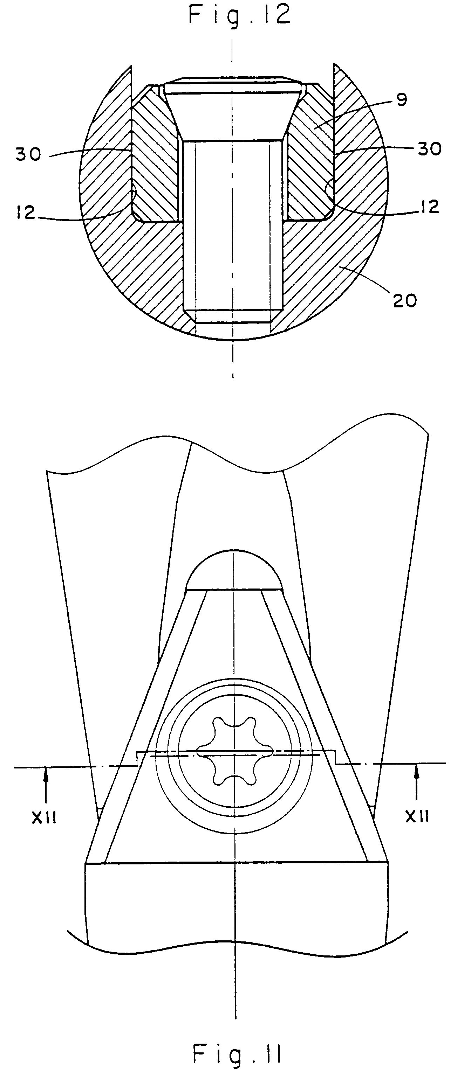

Figs. 11 and 12 show an alternative embodiment of the insert, when the side walls **30** of the pocket **20** are designed to bear tightly against the side walls **12** of the insert tail portion **9**. In this case, whilst a machining of the pocket **20** may be simplified, a lesser degree of reliability and firmness of mounting of the cutting insert in the pocket of the tool may be obtained. Such cutting tool is restricted to light machining operations with smaller machining forces.

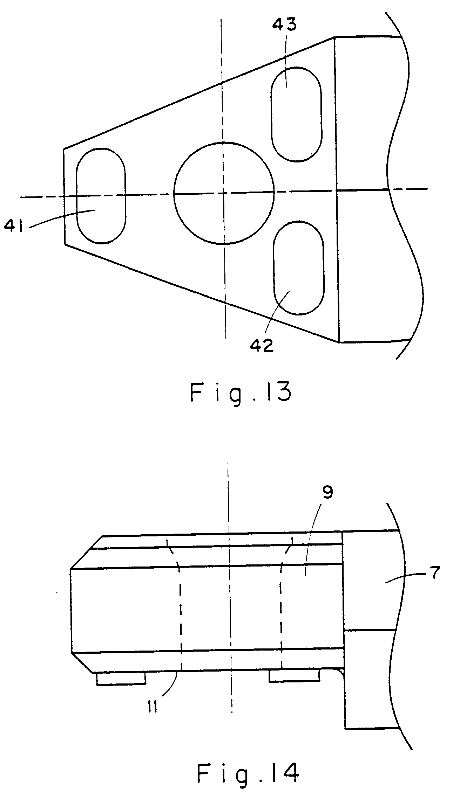

It should be noted that the base and the walls of the tail portion or of the pocket need not be flat. Thus, for example, the base can be provided with specifically shaped contacting portions ensuring a contact between the tail portion and the pocket to occur at predetermined zones and thereby enabling the cutting insert to be clamped in the pocket of the tool in a firm and reliable position. Thus, it may be particularly preferable to provide the base **11** of the tail **9** with seating projections **41**, **42** and **43** (Figs. 13, 14) ensuring thereby an effective three-point contact between the bases of the tail portion and of the pocket.

## Claims

1. A metal cutting tool comprising
a cutting insert (1) having a cutting portion (7) and a support portion (9) formed integrally therewith;
a tool holder (2) having a holder head portion (18) formed with an insert retaining pocket (20) adapted to receive said insert support portion (9);
said insert support portion (9) being formed with a support portion through bore (15) and said retaining pocket (20) being formed with a threaded pocket bore (26), the bores (15, 26) being adapted to be aligned when said support portion (9) is received in said pocket (20); and
screw means (3) for insertion into said aligned bores (15, 26) so as to screw clamp said support portion (9) in said pocket (20);
characterised in that
said support portion (9) constitutes a tail portion (9) having a base (11) and a pair of side walls (12) substantially perpendicular to said base (11) which side walls (12) converge towards each other from the cutting portion (7) to a tail terminal portion (13) remote from the cutting portion (7), said support portion through bore (15) being formed, adjacent a rim thereof, with a clamping engaging portion (17) adjacent said tail terminal portion (13);
said insert retaining pocket (20) being defined by a pocket base (22) and a pair of pocket side walls (23) which converge towards each other from a leading end (19) of said holder head portion (18) to an inner portion of said pocket (20) remote from said leading end (19) at an angle corresponding to an angle between the converging side walls (12) of the tail portion (9); and
said screw means (3) comprising a clamping screw (3) having an upper clamping portion (4) and a screw thread portion (6) and being adapted to be freely received within said support portion through bore (15);
the arrangement being such that
upon said tail portion (9) being received in said pocket (20), said support portion base (11) bears on the pocket base (22) and the support portion side walls (12) are disposed adjacent the pocket side walls (23), insertion of said clamping screw (3) into said aligned bores (15, 26) and consequent screw coupling of said screw thread portion (6) in the threaded pocket bore (26) results in said clamping portion (4) of the screw bearing clampingly against said clamping engaging portion (17) of the support portion through bore (15) with consequent biasing of said tail portion base (11) against said pocket base (22) and biasing of said tail terminal portion (13) towards said inner portion of the pocket (20) so as to ensure a contact between clamping surfaces of said side walls (12) of the tail portion (9) and of said side walls (23) of the pocket (20).

2. A metal cutting tool according to Claim 1, characterised in that said tail portion (9) extends from said cutting portion (7) of the insert (1) adjacent a rear end face (7a) of said cutting portion (7).

3. A metal cutting tool according to Claim 2, characterised in that a maximal cross-sectional dimension of the tool holder adjacent said rear end face (7a) of the cutting portion (7) does not exceed a maximal cross-sectional dimension of the insert (1).

4. A metal cutting tool according to any one of the preceding Claims, characterised in that the angle between the side walls (23) of the pocket (20) is slightly less than the angle between the side walls (12) of the tail portion (9).

5. A metal cutting tool according to Claim 4, characterised in that the side walls (23) of the pocket (20) and/or the side walls (12) of the tail portion (9) are formed with specifically shaped portions (24', 14') whereby contact between the side walls (23, 12) of the pocket (20) and the tail portion (9) is localized in predetermined locations.

6. A metal cutting tool according to Claim 5, characterised in that said specifically shaped portions are in the form of relatively small recessed portions (24', 14') located at intermediate regions of the respective side walls (23, 12).

7. A metal cutting tool according to any one of the preceding Claims, characterised in that the side walls (12) of the tail portion (9) include bevelled upper portions (14) constituting said clamping surfaces and adapted to be biased against respectively sloping upper portions (24) of the pocket side walls (23).

8. A metal cutting tool according to any one of the preceding Claims, characterised in that said through bore (15) of the support portion (9) is formed with an outwardly tapering countersunk portion (16) constituting said clamping engaging surface (17) of the support portion (9).

9. A metal cutting tool according to Claim 8, characterised in that said clamping screw (3) is formed with a conical portion (4) which tapers from a screw head (5) to the screw threaded portion (6), said conical portion (4) constituting the clamping portion (4) of the clamping screw (3).

10. A metal cutting tool according to Claim 9, characterised in that said through bore (15) has an axis (15') offset with respect to an axis (26') of the pocket bore (26) in the direction of the cutting portion (7) of the insert (1).

11. A metal cutting tool according to any of the preceding Claims, characterised in that said tail portion (9) of the insert (1) has a prismatic body of a trapezoid-like shape and the pocket (20) of the tool holder (2) is similarly shaped.
